# FASCICULE DE BREVET EUROPEEN

(11) **EP 0 509 926 B1**
(45) Date de publication et mention de la délivrance du brevet: **02.08.1995**
(21) Numéro de dépôt: 92401070.5
(22) Date de dépôt: 16.04.1992
(51) Int. Cl.: G21F 3/00, G21C 11/02, G21F 1/00

(54) **Installation pour le blindage biologique d'élément de circuit de fluide radioactif**
Einrichtung zur biologischen Abschirmung eines Kreislaufelements für radioaktive Flüssigkeit
Installation for the biological shielding of a circuit element for radioactive fluid

(30) Priorité: 18.04.1991 FR 9105020
(43) Date de publication de la demande: 21.10.1992
(73) Titulaire: SALVAREM, F-94290 Villeneuve le Roi (FR)
(72) Inventeur: Bosquet, Michel, F-45460 Brayenval (FR)
(74) Mandataire: Hénnion, Jean-Claude

(56) Documents cités:
- EP-A- 0 261 630
- DE-U- 9 002 825
- PATENT ABSTRACTS OF JAPAN vol. 15, no. 11 (P-1150)(4539) 10 Janvier 1991 & JP-A-2 257 095
- PATENT ABSTRACTS OF JAPAN vol. 1, no. 16 (M-009) 23 Mars 1977 & JP-A-51 130 799
- PATENT ABSTRACTS OF JAPAN vol. 15, no. 11 (P-1150)(4539) 10 Janvier 1991 & JP-A-2 257 095

## Description

La présente invention concerne la protection biologique de circuit dans lequel circulent ou sont déposés des éléments radioactif. Elle concerne plus particulièrement une installation comportant au moins un dispositif spécialement conçu pour s'adapter sur certains éléments de circuit - tels que vanne, tuyauterie, canalisation - et apte à assurer la protection biologique en diminuant l'intensité de l'irradiation à laquelle est soumis le personnel intervenant dans une installation dans le cadre de travaux de maintenance , réparation, inspection, décontamination ou démantèlement. Le domaine d'application de l'invention a trait notamment à l'industrie nucléaire.

La protection biologique, contre les irradiations dans l'industrie nucléaire, est assurée en interposant entre la source potentielle d'irradiation et le personnel d'intervention des organes de protection, consistant généralement dans des plaques d'un métal dense, arrêtant la propagation du rayonnement nocif, notamment en plomb. La réparation des fuites sur les éléments du circuit nécessite dans ce cas de démonter les plaques de protection. Par ailleurs ce type de protection ne peut pas être adapté spécifiquement aux éléments de circuit tels que des vannes, des parties de canalisation, des coudes...

On a déjà proposé dans le document japonais JP-A-3 024 498, un dispositif protecteur entourant une conduite pour fluide radioactif et constitué par l'assemblage de coffrets de protection possédant une cavité intérieure qui est destinée à recevoir un matériau apte à former un écran contre les rayonnements émis par ledit fluide radioactif. Chaque coffret possède dans sa partie haute un orifice pour l'introduction du matériau, et dans sa partie basse un orifice pour l'évacuation dudit matériau.

Le dispositif protecteur est monté sur la conduite par assemblage des différents coffrets vides. Ensuite chaque coffret est rempli avec le matériau protecteur.

De tels dispositifs de protection sont généralement placés à des endroits où soit les risques de fuite sont importants, soit l'intensité du rayonnement est grande. Par conséquent, lorsqu'on procède au remplissage ou à l'évacuation du matériau protecteur, en étant situé à proximité du dispositif de protection, les risques de contamination sont importants.

De plus, le remplacement du matériau protecteur doit être fait régulièrement lors d'opérations de maintenance et ponctuellement lors d'opérations de réparation de la conduite, ce qui accroît les occasions de contact avec d'éventuels rayonnements nocifs.

On a déjà proposé dans le document allemand DE-U - 9 002 825 une installation pour l'alimentation et l'évacuation automatiques d'un matériau protecteur contenu dans la cavité intérieure d'un caisson entourant une conduite et constituée par l'assemblage de coffrets dont les cavités intérieures respectives communiquent. Cette installation met en oeuvre des moyens mécaniques, lesquels de par leur manque de flexibilité, ne sont pas appropriés au remplissage simultané d'une pluralité de cavités intérieures avec un matériau protecteur, ou à l'évacuation simultanée du matériau contenu dans ladite pluralité de cavités. De plus, l'éloignement de la zone de contamination autorisé par une telle installation est minime, et s'accompagne d'un encombrement de l'espace qui rend extrêmement difficile la possibilité d'alimentation simultanée d'une pluralité de dispositifs protecteurs.

Le but que s'est fixé le demandeur est de proposer une installation spécialement conçue pour la protection contre les rayonnements provenant d'un circuit pour fluide radioactif, qui est souple d'emploi et qui permet l'alimentation ou l'évacuation automatique d'un ou plusieurs dispositifs de protection contenant un matériau protecteur, à une distance nettement supérieure au rayon de la zone de contamination.

Ce but est parfaitement atteint par l'installation selon l'invention. Celle-ci comprend de manière connue un ou plusieurs dispositifs protecteurs rigides qui enveloppent en tout ou partie un circuit pour fluide radioactif, qui possèdent au moins une cavité intérieure destinée à contenir un matériau de remplissage apte à former un écran contre lesdits rayonnements et dont les parties hautes et basses sont respectivement munies de moyens d'alimentation et de moyens d'évacuation du matériau de remplissage débouchant dans chaque cavité intérieure.

De manière caractéristique, chaque dispositif protecteur comporte au moins un évent muni d'une grille et reliant chaque cavité intérieure au niveau de leur partie haute, à l'extérieur; les moyens d'alimentation et d'évacuation consistent dans des conduits munis de clapets et fixés à demeure sur le dispositif protecteur. De plus, l'installation comporte une centrale de distribution composée de conduits de transfert reliés aux moyens d'évacuation et d'alimentation, de premiers et deuxièmes moyens de stockage du matériau de remplissage, de moyens de propulsion pneumatique aptes à être reliés aux premiers moyens de stockage et aux conduits de transfert prolongeant les moyens d'alimentation et de moyens d'aspiration aptes à être reliés aux deuxièmes moyens de stockage et aux conduits de transfert prolongeant les moyens d'évacuation.

Le matériau de remplissage se présente sous forme de billes métalliques ou grenailles, ce qui explique que les moyens d'alimentation et d'évacuation sont situés respectivement dans les parties haute et basse de chaque cavité intérieure. De même la partie haute de chaque évent par rapport à la cavité intérieure correspondante permet un passage du flux d'air injecté tant que la cavité intérieure n'est pas totalement remplie. La grille dont est équipé chaque évent est dimensionnée de manière à ne pas laisser passer le matériau de remplissage.

Les premiers moyens de stockage contiennent le matériau destiné à être injecté dans les cavités intérieures des dispositifs protecteurs; les deuxièmes moyens de stockage permettent la collecte du matériau qui est évacué, celui-ci pouvant être contaminé. Par conséquent, ces deuxièmes moyens de stockage doivent éventuellement être constitués d'un matériau tel que le plomb assurant une protection contre la contamination possible du matériau qui a été évacué.

S'agissant d'une installation comportant plusieurs moyens d'évacuation et d'alimentation, notamment dans le cas où l'installation comprend plusieurs dispositifs protecteurs, lesdits moyens sont avantageusement reliés respectivement aux moyens de propulsion pneumatique et d'aspiration par l'intermédiaire de systèmes répartiteurs, montés sur les conduits de transfert. Ces systèmes répartiteurs permettent de séparer en plusieurs flux de façon homogène le flux du matériau de remplissage qui est injecté ou évacué.

Les dispositifs protecteurs d'une installation selon l'invention peuvent être constitués d'une seule pièce moulée, comportant une ou plusieurs cavités intérieures. Cependant, afin de faciliter le montage de ces dispositifs, en particulier sur des éléments de circuit de dimensions réduites, du type tuyaux, vannes, coudes, les dispositifs protecteurs sont avantageusement constitués par l'assemblage d'au moins deux modules de protection complémentaires, possédant chacun une cavité intérieure.

Plus particulièrement, afin d'éviter un trop grand nombre de moyens d'alimentation et d'évacuation pour une installation donnée, les cavités intérieures des modules de protection constituant un même dispositif protecteur, avantageusement communiquent . Dans ce cas, chaque dispositif protecteur peut possèder un évent unique, et des moyens d'alimentation et d'évacuation unitaires.

Dans un mode de réalisation avantageux, les dispositifs protecteurs sont réalisés en matériau composite préformé par moulage. Ils sont ainsi plus légers et sont donc plus faciles à mettre en place.

De plus, le préformage par moulage permet de concevoir des dispositifs protecteurs qui s'adaptent facilement à toute forme d'élément de circuit, tel qu'un coude.

Certaines portions du circuit subissent des contraintes mécaniques importantes du fait du poids supplémentaire des dispositifs protecteurs pleins. Cet alourdissement local d'une portion du circuit peut avoir des conséquences sur son comportement vibratoire et sur la résistance de son supportage. Par conséquent, certains dispositifs protecteurs de l'installation, notamment ceux de plus grande taille, peuvent être avantageusement supportés par un pied dont l'extrémité haute est munie d'une pièce dont le contour intérieur épouse les parois extérieures du dispositif protecteur.

De préférence, la partie de la centrale de distribution correspondant aux moyens de propulsion pneumatique et d'aspiration, et aux premiers et deuxièmes moyens de stockage, est mobile.

Dans un mode de réalisation préférentiel, le matériau de remplissage est constitué de billes de plomb.

D'autres avantages et caractéristiques de l'invention ressortiront plus clairement de la description qui va être faite d'exemples de réalisation de l'installation pour la protection biologique d'élément de circuit de fluide contaminant, notamment radioactif,illustrés par le dessin annexé dans lequel :

La figure 1 est une vue en perspective partielle d'un circuit de l'industrie nucléaire et d'une installation de protection selon l'invention.

La figure 2 est une vue en coupe d'un dispositif protecteur pour un coude.

La figure 3 est une vue en coupe d'un dispositif protecteur pour une vanne.

La figure 4 est une vue en perspective d'un module de protection pour une tuyauterie.

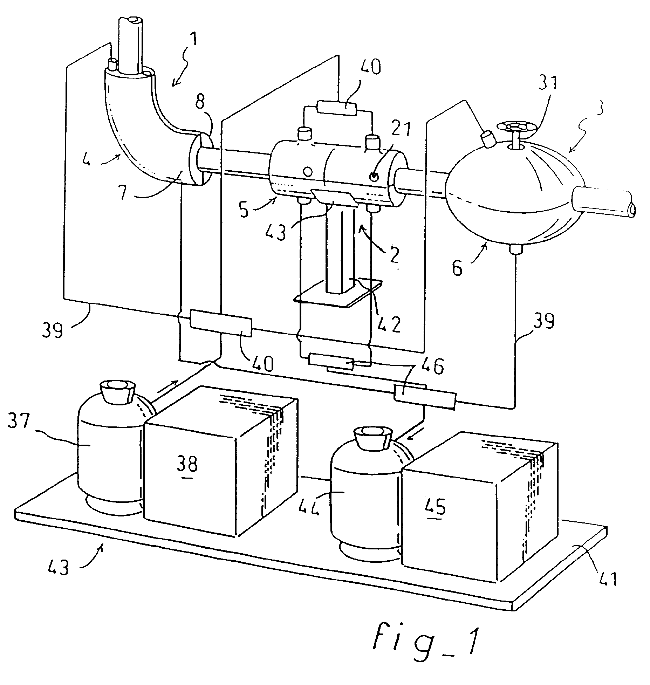

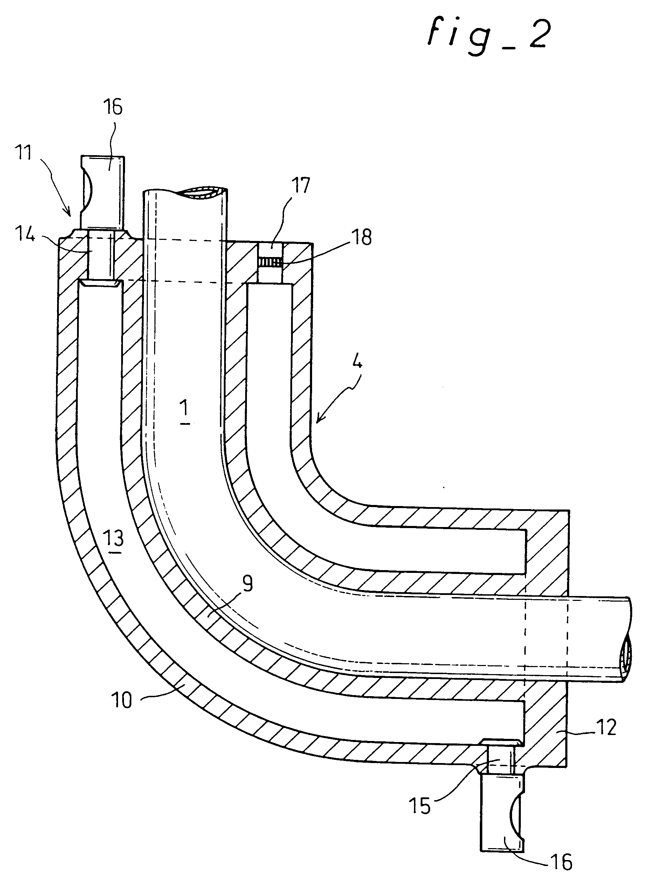

On a représenté sur la figure 1 une vue très partielle d'un circuit de fluide, comprenant une portion de canalisation droite, un coude et un embranchement avec vanne , dans lesquels circule un fluide contaminant radioactif ; il s'agit par exemple du circuit primaire d'un réacteur nucléaire . Le coude 1 , une partie de la canalisation droite 2 et l'embranchement avec vanne 3 sont recouverts de dispositifs modulaires de protection biologique selon l'invention respectivement 4,5,6, qui vont être décrits ci-après à l'aide des figures 2,3 et 4.

Le dispositif protecteur 4, enveloppant le coude 1, est composé de deux coques 7,8 emboîtables qui délimitent , après emboîtement, un évidement central ayant strictement la configuration du coude 1 et de dimensions telles que les deux coques 7,8 assemblées enserrent ledit coude 1.

Chaque coque 7,8, encore appelée module de protection, est réalisée en matériau composite, mis en forme par moulage , notamment à base de fibres de verre, en conformité avec les normes imposées dans l 'industrie nucléaire. Comme cela apparaît clairement sur la figure 2, la coque 7,8 a une paroi interne 9 destinée à venir en contact avec le coude 1, une paroi externe 10 et deux parois latérales 11,12 ; l'ensemble de ces parois 9,10,11,12 délimitent une cavité interne 13.

La cavité interne 13 est reliée à l'extérieur par deux conduits : l'un d'alimentation 14 et l'autre d'évacuation 15, placés respectivement pour le premier 14 dans la paroi latérale supérieure 11 et pour le second 15 dans la partie la plus basse de la paroi externe 10. Ces deux conduits 14,15 sont équipés de clapets de raccordement et d'obturation 16.

La paroi latérale supérieure 11 est aussi percée d'un orifice ou évent 17, destiné à relier la cavité intérieure 13 à l'air extérieur. Cet évent 17 est muni d'une grille 18.

Dans l'exemple illustré , les cavités internes 13 des deux coques 7,8 communiquent entre elles , de sorte qu'il n'y a pour le système modulaire 4 enveloppant le coude 1 qu'un seul conduit d'alimentation 14 et qu'un seul conduit d'évacuation 15.

Les deux parois interne 9 et externe 10 de chaque coque 7,8 comportent alternativement des prolongements qui sont aptes à pénétrer dans les cavités intérieures , de telle sorte de réaliser par emboîtement l'assemblage des deux coques 7,8.

La fixation des deux coques 7,8 autour du coude 1 peut être réalisée par des colliers de serrage enserrant les deux coques 7,8 ou bien grâce à une configuration particulière des coques, comme ce qui va être décrit ci-après pour la canalisation droite 2.

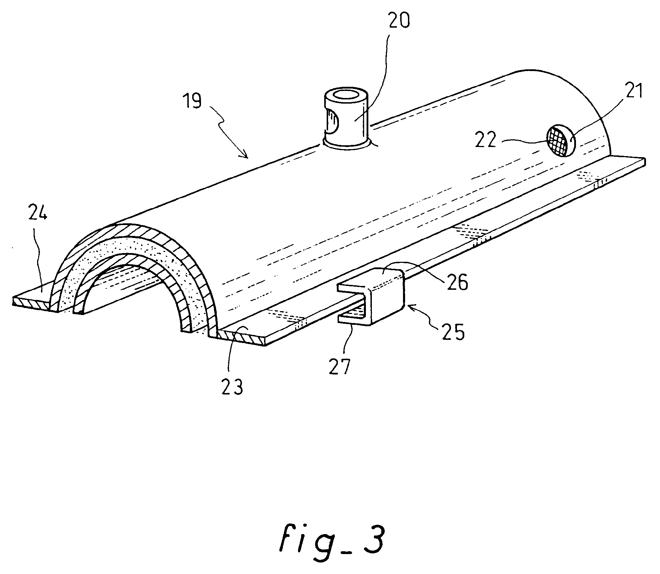

On a représenté sur la figure 3 un module 19 pour canalisation droite 2 , qui a globalement l'apparence d'un demi-cylindre , tronçonné longitudinalement . Comme pour le dispositif protecteur 4 pour coude 1 décrit ci-dessus, ce module 19 comporte une cavité intérieure non visible sur la figure 3, qui est reliée vers l'extérieur par un conduit 20, qui sert soit à l'alimentation soit à l'évacuation, en fonction de la place prise par le module 19 dans l'assemblage . Ce module 19 comporte également un évent 21 obturé par une grille 22.

Il comporte enfin deux décrochements radiaux 23,24, le prolongeant vers l'extérieur et qui sont exempts de cavité intérieure. Lors de la mise en place de deux modules 19, autour de la canalisation droite 2, les décrochements radiaux 23,24 des deux modules 19 se font face et s'appliquent les uns sur les autres. Dans ce cas des moyens de fixation indépendants des modules ou éventuellement solidaires de l'un des décrochements 23,24 bloquent en position les deux décrochements appliqués l'un contre l'autre; sur la figure 3 on a représenté un type de moyen de fixation, en forme de U, dont les deux branches 26,27 prennent en sandwich les décrochements 23,24 superposés des deux modules assemblés.

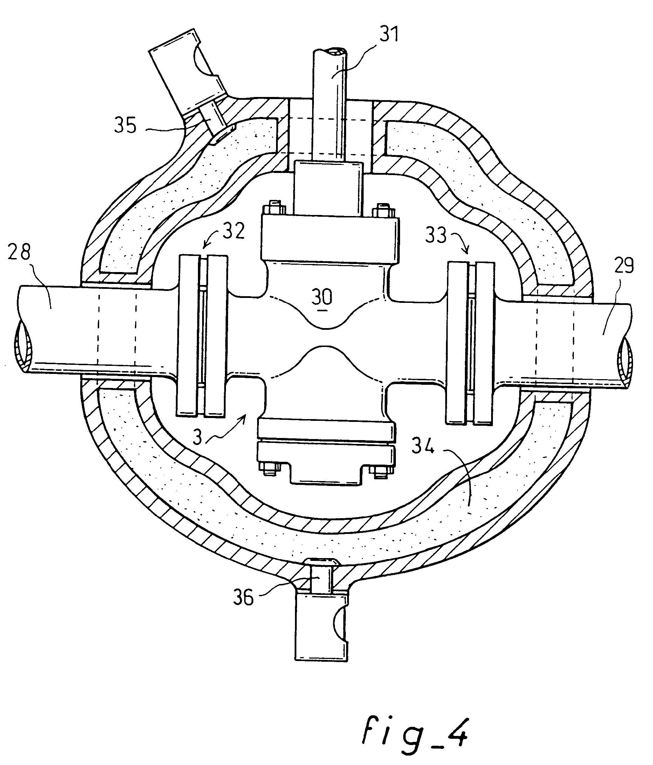

On a représenté sur la figure 4 un exemple de dispositif protecteur selon l'invention, spécialement adapté pour un embranchement entre deux tuyauteries 28,29, ledit embranchement comportant une vanne 30 dont l'ouverture et la fermeture sont commandées à l'aide d'un robinet dont seule la tige de commande 31 est visible sur la figure.

Le dispositif protecteur est conformé pour épouser au mieux les contours de la vanne 30, des adaptateurs de raccordement 32,33 de la vanne 30 avec les tuyauteries 28,29 , et de la tige de commande 31. La cavité intérieure 34 est reliée à l'extérieur par un premier conduit d'alimentation et de raccordement 35, situé dans la partie haute près de la tige de commande 31, et par un second d'évacuation et de raccordement 36, situé dans la partie la plus basse.

Les cavités intérieures des dispositifs protecteurs modulaires qui viennent d'être décrites à titre d'exemple sont destinées à recevoir un matériau de remplissage, apte à faire écran contre le rayonnement, dû au fluide radioactif au niveau de l'élément de circuit correspondant et à l'activation du circuit lui même. De préférence ce matériau consiste en des billes de plomb.

On met d'abord en place , sur les éléments de circuit que l'on souhaite protéger, les dispositifs protecteurs modulaires non remplis de billes. S'agissant de structures creuses et légères , cette mise en place est très facile et rapide.

Le remplissage ou le vidage des cavités intérieures se fait à distance à partir d'une centrale de distribution 43. Celle-ci comporte des moyens de propulsion pneumatique 37, connectés à des premiers moyens de stockage 38 des billes tels qu'une cuve hermétique, et raccordés à tous les conduits d'alimentation des dispositifs protecteurs de l'installation, à l'aide de conduits de transfert 39. Les moyens de propulsion 37 , par exemple du type ventilateur, doivent être aptes à propulser les billes dans les conduits de transfert 39 et dans les conduits d'alimentation, éventuellement par l'intermédiaire de systèmes répartiteurs 40 ayant pour fonction de séparer en plusieurs flux de façon homogène le flux de billes provenant d'une conduite donnée.

Compte-tenu du poids des billes , les conduits d'alimentation sont toujours placés dans la partie haute des cavités intérieures des dispositifs protecteurs 4,5,6. De préférence , comme cela est montré sur la figure 1 uniquement sous le dispositif protecteur modulaire 5 adapté sur la canalisation droite 2, les dispositifs protecteurs 4,5,6 sont supportés par des pieds 42 dont l'extrémité haute est munie d'une pièce 43 dont le contour intérieur épouse les parois externes des dispositifs. Ainsi le poids du dispositif et des billes de remplissage est supporté entièrement par le pied 42 et non par la canalisation 2 elle-même.

La centrale de distribution comporte également des moyens d'aspiration 44 connectés à des deuxièmes moyens de stockage 45 et raccordés à tous les conduits d'évacuation des dispositifs protecteurs de l'installation, à l'aide de conduits de transfert. Les deuxièmes moyens de stockage 45 servent à la collecte des billes contenues dans les dispositifs protecteurs, et qui éventuellement sont contaminées. On peut également envisager dans un autre mode particulier de réalisation de l'installation, et sans pour autant sortir du cadre de l'invention, que les premiers et deuxièmes moyens de stockage sont constitués par la même cuve hermétique, qui dans ce cas est reliée à la fois aux moyens de propulsion pneumatiques 37, et aux moyens d'aspiration 44. Le flux des billes évacuées à l'aide des moyens d'aspiration peut également être régulé par l'intermédiaire de systèmes répartiteurs 46, montés sur les conduits de transfert.

Les moyens de propulsion et d'aspiration, et les moyens de stockage 38, 44 peuvent être sur une plateforme 41 mobile, tractée par camion. Cette plateforme est alors placée hors de la zone de contamination.

Lors d'une fuite accidentelle , le temps d'intervention peut être particulièrement réduit , ainsi que les risques de contamination. Pour cela on transporte la partie mobile de la centrale de distribution 43 dans une zone proche mais non contaminée. On raccorde les moyens d'aspiration 44 sur le conduit d'évacuation du dispositif protecteur correspondant à la fuite. On prélève par aspiration les billes contaminées qui sont collectées dans les moyens de stockage 45. On démonte les modules du dispositif collecteur, on répare la fuite, on replace le dispositif collecteur et on injecte de nouvelles billes , non contaminées.

Même s'il n'y a pas de fuite accidentelle , il peut être utile régulièrement de prélever toutes les billes lorsque celles-ci sont contaminées et de les remplacer par des billes non contaminées , comme cela a été décrit ci-dessus.

Dans le cas de billes de plomb, il a été remarqué que celles-ci ne sont quasiment pas contaminées , même après un long séjour dans les dispositifs protecteurs.

L'invention n'est pas limitée aux modes de réalisation qui ont été décrits à titre d'exemples non exhaustifs mais en couvre toutes les variantes. En particulier le dispositif protecteur peut prendre toutes formes adaptées à l'élément de circuit à protéger. Il peut même s'agir de modules plats destinés à former un mur de protection par empilement. On comprend que dans ce cas les modules devront être conformés de sorte qu'ils s'imbriquent les uns dans les autres. On peut également envisager, sans pour autant sortir du cadre de l'invention, des moyens de propulsion et d'aspiration quine sont pas dissociés.

## Revendications

1. Installation spécialement conçue pour la protection contre les rayonnements provenant d'un circuit pour fluide radioactif qui est enveloppé en tout ou partie par un ou plusieurs dispositifs protecteurs (4) rigides qui possèdent au moins une cavité intérieure (13) destinée à contenir un matériau de remplissage apte à former un écran contre lesdits rayonnements et dont les parties hautes et basses sont respectivement munies de moyens d'alimentation et de moyens d'évacuation du matériau de remplissage débouchant dans chaque cavité intérieure, caractérisée d'une part en ce que chaque dispositif comporte au moins un évent (17) muni d'une grille (18) reliant chaque cavité intérieure (13) au niveau de leur partie haute, à l'extérieur, et en ce que les moyens d'alimentation et d'évacuation consistent dans des conduits (14, 15) munis de clapets (16) et fixés à demeure sur le dispositif protecteur et d'autre part en ce que l'installation comporte une centrale de distribution (43) composée de conduits de transfert (39),de premiers (38) et deuxièmes (45) moyens de stockage du matériau de remplissage, de moyens de propulsion pneumatique (37) aptes à être reliés aux premiers moyens de stockage et aux conduits de transfert prolongeant les moyens d'alimentation, et de moyens d'aspiration (44) aptes à être reliés aux deuxièmes moyens de stockage (45) et aux conduits de transfert prolongeant les moyens d'évacuation.

2. Installation selon la revendication 1 caractérisée en ce qu'elle comporte plusieurs moyens d'alimentation et d'évacuation, lesquels sont reliés respectivement aux moyens de propulsion pneumatique (37) et aux moyens d'aspiration (44) par l'intermédiaire de systèmes répartiteurs (40) et (46) qui sont montés sur les conduits de transfert, et qui ont pour fonction de séparer en plusieurs flux de façon homogène le flux du matériau de remplissage respectivement injecté ou aspiré.

3. Installation selon la revendication 1 ou 2 caractérisée en ce qu'au moins un dispositif protecteur est constitué par l'assemblage d'au moins deux modules de protection complémentaires ayant chacun une cavité intérieure.

4. Installation selon la revendication 3 caractérisée en ce que les cavités intérieures des modules constituant un dispositif protecteur, communiquent entre elles.

5. Installation selon l'une quelconque des revendications 1 à 4 caractérisée en ce que chaque dispositif protecteur est réalisé en matériau composite préformé par moulage.

6. Installation selon l'une quelconque des revendications 1 à 5 caractérisée en ce qu'au moins un dispositif protecteur est supporté par un pied (42) dont l'extrémité haute est munie d'une pièce (43) dont le contour intérieur épouse les parois extérieures du dispositif protecteur.

7. Installation selon l'une quelconque des revendications 1 à 6 caractérisée en ce que les premiers et deuxièmes moyens de stockage et les moyens de propulsion pneumatique et d'aspiration sont montés sur un support mobile.

8. Installation selon l'une quelconque des revendications 1 à 7 caractérisée en ce que le matériau de remplissage est constitué de billes de fonte hématite.

## Patentansprüche

1. Einrichtung zum Schutz gegen Strahlung, die aus einem Kreislauf für ein radioaktives Fluid herrührt, welcher ganz oder teilweise von mehreren starren Schutzvorrichtungen (4) umgeben ist, die wenigstens einen inneren Hohlraum (13) besitzen, der vorgesehen ist, um ein als Abschirmung gegen die Strahlung geeignetes Füllmaterial zu enthalten, und deren obere und untere Bereiche jeweils mit Zuleitungs- und Ableitungsmitteln zum Zuleiten bzw. Ableiten des Füllmaterials versehen sind, die in jeden inneren Hohlraum münden,
dadurch **gekennzeichnet,** daß
zum einen jede Vorrichtung wenigstens eine mit einem Gitter (18) versehene Entlüftungsöffnung (17) umfaßt, die jeden inneren Hohlraum (13) in seinem oberen Bereich mit der Umgebung verbindet, und daß die Zuleitungs- und Ableitungsmittel aus mit Ventilen (16) versehenen Leitungen (14, 15) bestehen, die dauerhaft an der Schutzvorrichtung befestigt sind, und daß zum anderen die Einrichtung eine Verteilerzentrale (53) aufweist, die gebildet ist aus Transportleitungen (39), ersten (38) und zweiten (45) Lagermitteln für das Füllmaterial, pneumatischen Antriebsmitteln (37), die eingerichtet sind, um mit den ersten Lagermitteln und den die Zuleitungsmittel verlängernden Transportleitungen verbunden zu werden, und Saugmitteln (44), die eingerichtet sind, um mit den zweiten Lagermitteln (45) und den die Ableitungsmittel verlängernden Transportleitungen verbunden zu werden.

2. Einrichtung nach Anspruch 1,
dadurch gekennzeichnet, daß
sie mehrere Zuleitungs- und Ableitungsmittel umfaßt, die mit den pneumatischen Fördermitteln (37) bzw. den Saugmitteln (44) über Verteilersysteme (40) und (46) verbunden sind, die an den Transportleitungen montiert sind und deren Funktion es ist, den Strom des eingegebenen oder angesaugten Füllmaterials homogen auf mehrere Ströme zu verteilen.

3. Einrichtung nach Anspruch 1 oder 2,
dadurch gekennzeichnet, daß
wenigstens eine Schutzvorrichtung gebildet ist durch Zusammensetzen von wenigstens zwei komplementären Schutzmodulen mit jeweils einem inneren Hohlraum.

4. Anlage nach Anspruch 3,
dadurch gekennzeichnet, daß
die inneren Hohlräume der eine Schutzvorrichtung bildenden Module miteinander in Verbindung stehen.

5. Einrichtung nach einem der Ansprüche 1 bis 4,
dadurch gekennzeichnet, daß
jede Schutzvorrichtung durch Formung eines Verbundmaterials vorgefertigt ist.

6. Einrichtung nach einem der Ansprüche 1 bis 5,
dadurch gekennzeichnet, daß
wenigstens eine Schutzvorrichtung von einem Fuß (42) getragen wird, dessen oberes Ende mit einem Stück (43) versehen ist, dessen Innenform an die Außenwände der Schutzvorrichtung anschließt.

7. Einrichtung nach einem der Ansprüche 1 bis 6,
dadurch gekennzeichnet, daß
die ersten und zweiten Lagermittel, die pneumatischen Antriebsmittel und die Saugmittel auf einem beweglichen Träger montiert sind.

8. Einrichtung nach einem der Ansprüche 1 bis 7,
dadurch gekennzeichnet, daß
das Füllmaterial aus Kugeln aus Hämatitroheisen besteht.

## Claims

1. Installation, especially designed for protection against radiation coming from a circuit for a radioactive fluid, which circuit is completely or partly enclosed by one or more rigid protective devices (4) which have at least one internal cavity (13) intended to contain a filling material which can form a screen against the said radiation and whose top and bottom parts are respectively fitted with means for supplying and means for removing the filling material, which means open into each internal cavity, characterized, on the one hand, in that each device includes at least one vent (17) fitted with a grill (18) connecting each internal cavity (13) at its top part to the outside, and in that the supply and removal means consist of ducts (14, 15) fitted with valves (16) and permanently fixed onto the protective device and, on the other hand, in that the installation includes a central distribution unit (43) composed of transfer ducts (39), first (38) and second (45) storage means for the filling material, pneumatic propulsion means (37) which can be connected to the first storage means and to the transfer ducts extending the supply means, and suction means (44) which can be connected to the second storage means (45) and to the transfer ducts extending the removal means.

2. Installation according to Claim 1, characterized in that it includes a plurality of supply and removal means, which are connected respectively to the pneumatic propulsion means (37) and to the suction means (44) by means of distributor systems (40) and (46) which are mounted on the transfer ducts, and which have the function of homogeneously separating, into a plurality of flows, the flow of filling material respectively injected or sucked out.

3. Installation according to Claim 1 or 2, characterized in that at least one protective device is constituted by assembling at least two complementary protective modules, each having an internal cavity.

4. Installation according to Claim 3, characterized in that the internal cavities of the modules constituting a protective device communicate with each other.

5. Installation according to any one of Claims 1 to 4, characterized in that each protective device is made of composite material preformed by moulding.

6. Installation according to any one of Claims 1 to 5, characterized in that at least one protective device is supported by a leg (42) whose top end is fitted with a part (43) whose internal contour matches the external walls of the protective device.

7. Installation according to any one of Claims 1 to 6, characterized in that the first and second storage means and the pneumatic-propulsion and suction means are mounted on a mobile support.

8. Installation according to any one of Claims 1 to 7, characterized in that the filling material consists of balls of haematite pig iron.
